# EUROPEAN PATENT APPLICATION

(11) **EP 4 811 247 A1**
(43) Date of publication of application: **23.09.2026**
(21) Application number: 26164198.9
(22) Date of filing: 12.03.2026
(51) Int. Cl.: G06Q 10/087, G06Q 20/20, G06Q 30/04, G07G 1/00, G07G 1/01

(54) **SALES METHOD AND SALES SYSTEM**

(30) Priority: 18.03.2025 JP 2025043579
(71) Applicant: GLORY LTD., Himeji-shi Hyogo 670-8567 (JP)
(72) Inventor: OZAKI, Hirofumi, Himeji-shi, Hyogo, 670-8567 (JP); YAMAGUCHI, Teruki, Himeji-shi, Hyogo, 670-8567 (JP); KATAOKA, Ryuji, Himeji-shi, Hyogo, 670-8567 (JP); YAMASHITA, Minami, Himeji-shi, Hyogo, 670-8567 (JP)
(74) Representative: SSM Sandmair

(57) **Abstract**

A sales method for a store that places items on an item shelf to sell the items includes: detecting that a customer picks up an item from the item shelf, by using an item detection sensor; and performing, when a pickup of the item is detected by the item detection sensor, a notification of information indicating that the pickup of the item has been detected, by using a notification device provided on the item shelf.

## Description

### TECHNICAL FIELD

The present disclosure relates to a sales method and a sales system for preemptively preventing the theft of items sold in a store.

### BACKGROUND ART

In recent years, various security measures have been implemented to prevent the theft of items sold in a store. With the spread of self-service sales systems such as self-checkout machines and smart carts, which allow customers to register information on items to be purchased by using terminals provided with the registers or carts and to make payment of the transaction amount without any involvement of a clerk, the importance of crime prevention has increased. For example, Japanese Laid-Open Patent Publication No. 2021-51488 discloses a system for detecting that an item has been picked up from an item shelf and issuing a warning if information on the item is not registered on a cart terminal of a smart cart within a predetermined time.

In the conventional art, it is possible to detect the possibility of item theft to prevent it. Furthermore, conventional systems, in which security cameras are installed in stores to detect the act of stealing items, are widely utilized. However, from the viewpoint of preemptive crime prevention, there remains room for further improvement.

### SUMMARY

The present disclosure has been made in view of the problem, as well as other problems, of the conventional art, and the present disclosure addresses these issues, as discussed herein, with a sales method and a sales system for preemptively preventing the theft of items.

A sales method according to one aspect of the present disclosure is a sales method for a store that places items on an item shelf to sell the items, and includes: detecting that a customer picks up an item from the item shelf, by using an item detection sensor; and performing, when a pickup of the item is detected by the item detection sensor, a notification of information indicating that the pickup of the item has been detected, by using a notification device provided on the item shelf.

In the above configuration, the sales method may further include, when the item detection sensor has detected taking of an item, performing a notification of information indicating an item name of the item picked up from the item shelf, by using the notification device of the item shelf.

In the above configuration, the sales method may further include, when the item detection sensor has detected taking of an item, performing a notification of information indicating a number of the items picked up from the item shelf, by using the notification device. The number of items may be the number of the same items picked up from the same display position on the item shelf, or a total number of different items picked up from different display positions on the item shelf.

In the above configuration, a carrier that is provided with a notification device and is used by a customer to carry an item to be purchased in the store may be prepared in advance in the store. The sales method may further include, when the item detection sensor has detected taking of an item, performing a notification of information indicating that the pickup of the item from the item shelf has been detected, by using the notification device provided on the carrier used by a customer who has picked up the item. The carrier may be a shopping cart or a shopping basket including the notification device.

In the above configuration, when a predetermined time has elapsed after the item detection sensor detected the pickup of an item, and information on the item has not been registered on a registration terminal for registering therein information necessary for checkout of an item carried by the carrier, the sales method may further include changing a content of the information notified via the notification device provided on the carrier.

In the above configuration, the notification device provided on the carrier is a registration terminal configured to register therein information necessary for checkout of an item carried by the carrier.

In the above configuration, the notification device provided on the carrier may be a light-emitting device.

In the above configuration, the sales method may further include, managing, in association, information on the carrier used by the customer, and information on items picked up by the customer to put in the carrier obtained by tracking the customer moving in the store by using a plurality of imaging devices provided in the store. The information on items may include information on a registered item for which the information necessary for checkout has been registered on the registration terminal used with the carrier, and information on an unregistered item for which the information necessary for checkout has not been registered on the registration terminal. The registration terminal may be installed on the carrier.

In the above configuration, the sales method may further include transmitting information on the unregistered item to a communication terminal used by a clerk.

In the above configuration, the sales method may further include detecting a customer proceeding to a checkout counter in the store, and performing a notification of information indicating a total number of items picked up by the customer from an item shelf, by using a notification device provided near the checkout counter.

A sales system according to one aspect of the present disclosure is a sales system for a store that places items on an item shelf, and includes: an item detection sensor configured to detect that a customer picks up an item from the item shelf; and a notification device provided on the item shelf and configured to perform, when the item detection sensor has detected a pickup of the item, a notification of information indicating that the pickup of the item has been detected.

### BRIEF DESCRIPTION OF THE DRAWINGS

FIG. 1 illustrates an outline of a sales method and a sales system according to the present disclosure:
FIG. 2 is a block diagram showing an example of the configuration of the sales system;
FIG. 3 is a flowchart showing an example of a processing flow performed by a management apparatus for an item shelf display,
FIGS. 4A to 4C show examples of a screen displayed on the item shelf display by the management apparatus;
FIG. 5 is a flowchart showing an example of a processing flow performed by the management apparatus for a cart terminal and a notification device provided on a cart;
FIGS. 6A to 6C show examples of a screen displayed on the cart terminal by the management apparatus;
FIG. 7 is a flowchart showing an example of a processing flow performed by the management apparatus for a checkout counter display device; and
FIGS. 8A and 8B show examples of a screen displayed on the checkout counter display device by the management apparatus.

### DESCRIPTION OF EMBODIMENTS

Hereinafter, a sales method and a sales system according to the present disclosure will be described with reference to the accompanying drawings. The sales system is a system for selling items to customers in a store.

### [Outline of sales system]

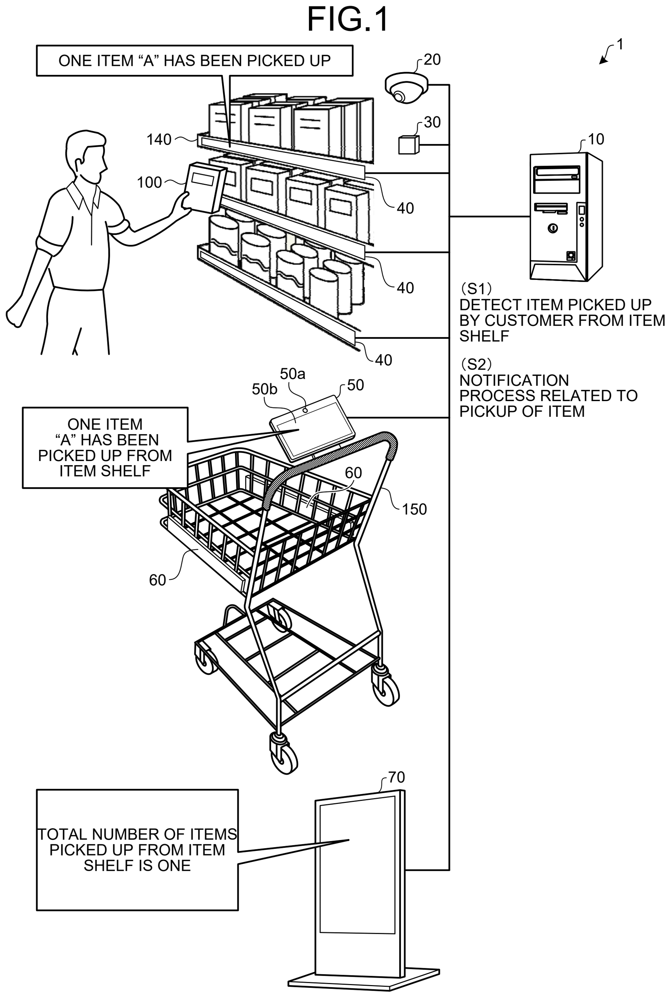

FIG. 1 schematically illustrates an outline of a sales method and a sales system 1 according to the present embodiment. The sales system 1 includes a management apparatus 10, a camera 20, a weight sensor 30, and an item shelf display 40 provided on an item shelf 140. The sales system 1 may include a cart terminal 50 and a notification device 60 provided on a shopping cart 150 (hereinafter, referred to as cart 150). The sales system 1 may include a checkout counter display 70 installed near a checkout counter in a store.

First, an outline of the sales method performed using the sales system 1 will be described. In the sales system 1, items are sold by using the cart 150 provided with the cart terminal 50 and the notification device 60 as shown in FIG. 1. The cart terminal 50 is a registration terminal that registers information necessary for item checkout. For example, a tablet-type computer device including a control circuitry, a memory, and a communication unit is used as the cart terminal 50. The cart terminal 50 includes a camera used as a scanner 50a for registering information on items and a display 50b. The display 50b includes a touch-panel liquid crystal display device. The cart terminal 50 may function as a POS terminal connected to a POS server. In this embodiment, the expression "information on the item" refers to information relevant to the item, such as name, price, and the like.

A customer picks up an item 100 to purchase from the item shelf 140 and causes the scanner 50a of the cart terminal 50 to read the barcode attached to the item 100. Information on the item to be purchased is registered in a POS system based on the barcode read by the scanner 50a. The information on the item, i.e., the item information may include the name, quantity, and price of the item to be purchased by the customer. The item information is displayed on the display 50b of the cart terminal 50. A shopping cart including a registration terminal, such as the cart terminal 50 for registering item information, may also be referred to by another name, such as a smart cart.

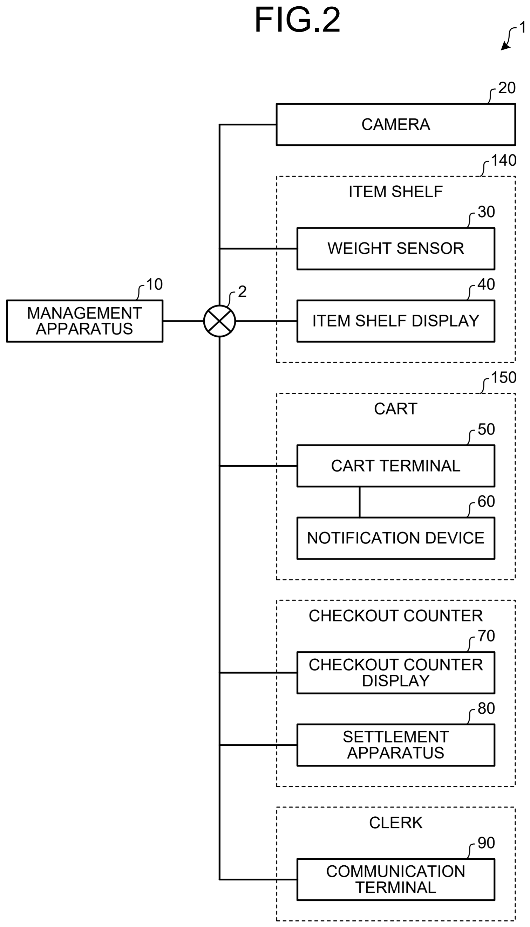

After registering the item 100 picked up from the item shelf 140 by using the scanner 50a of the cart terminal 50, the customer places the registered item into the cart 150 to continue shopping. When the customer who has placed the item to be purchased into the cart 150 moves to a checkout counter in order to start checkout using a settlement apparatus 80 (see FIG. 2), information on the item to be purchased by the customer has already been registered and the transaction amount has also been calculated. Therefore, the customer can complete the checkout merely by paying the transaction amount at the settlement apparatus 80 via electronic settlement or cash settlement. Such an item sales method can be performed using conventional technologies such as a POS system and a smart cart.

Next, operations that the sales system 1 performs to prevent the theft of items will be described. As shown in FIG. 1, the management apparatus 10 detects a customer by using the camera 20, and detects an item picked up by the customer from the item shelf 140 by using the weight sensor 30 (S1). The management apparatus 10 associates the customer with the item picked up by the customer from the item shelf 140, and manages correspondences between customers in the store and items picked up from the item shelf 140.

The management apparatus 10 is a computer device including a control circuitry, a memory, and a communication unit. A cloud server may be used as the management apparatus 10. A plurality of computer devices may cooperate to implement the management apparatus 10.

The camera 20 is an exemplary customer detection sensor that detects customers in the store. The camera 20 detects a position of each customer moving in the store. The camera 20 may detect not only the position of the customer but also the movement of the customer and/or the movement of the hands of the customer. The type of the camera 20 is not particularly limited. For example, the camera 20 may perform the detection by using electromagnetic waves such as visible light, infrared light, or laser may be used. Specifically, a visible light camera, an infrared light camera, a TOF (Time of Flight) camera, a depth camera, or a LiDAR (Light Detection and Ranging) camera may be used as the camera 20. One or more cameras 20 are provided corresponding to each of a plurality of item shelves 140 installed in the store. The management apparatus 10 can detect each customer looking around the item shelves 140 and track the customer moving in the store.

The weight sensor 30 is an exemplary item detection sensor for detecting an item 100 picked up by a customer from the item shelf 140. The management apparatus 10 detects a weight change on the item shelf 140 and the position of the weight change by using the weight sensors 30. For example, the weight sensors 30 may be arranged on the item shelf 140 to detect a weight change for each item 100 or each row of each tier of the item shelf 140. The management apparatus 10 manages information on the items 100 sold in the store. The information includes a name, a price, weight per item, and a position of each item 100 on the item shelf 140. The position may include a tier and row of the item shelf 140. Thus, the management apparatus 10 can identify the name, price, and quantity of each item 100 picked up from the item shelf 140, based on the weight change and the position of the weight change detected by the weight sensor 30. The item detection sensor is not limited to the weight sensor 30. For example, instead of or in addition to the weight sensor 30, a sensor capable of detecting the presence or absence of an item by emitting electromagnetic waves such as visible light, laser, or ultrasonic waves or transmitting and receiving the same may be used as the item detection sensor. A sensor that detects an item utilizing a tag attached to each item through short-range wireless technologies, such as an NFC (Near Field Communication), or an RFID (Radio Frequency Identifier), may be used as the item detection sensor. A camera-type sensor that detects an item by analyzing captured images may be used as the item detection sensor. The customer detection sensor may serve as the item detection sensor, or the item detection sensor may serve as the customer detection sensor.

As shown in FIG. 1, upon detecting that a customer has picked up an item 100 from the item shelf 140 by using the camera 20 and the weight sensor 30, the management apparatus 10 performs a notification process related to the item picked up from the item shelf 140 (S2).

### <Notification via item shelf>

The management apparatus 10 displays information indicating that the item pickup has been detected, on the item shelf display 40 provided on the item shelf 140 from which the customer picked up the item 100. The item shelf display 40 is an exemplary notification device provided on the item shelf 140. The notification via the item shelf display 40 is performed to inform the customer who has picked up the item 100 from the item shelf 140 that the management apparatus 10, i.e., the store, has grasped information on the item 100 picked up by the customer from the item shelf 140, such as name, quantity, and the like.

For example, the item shelf display 40 is configured to include a liquid crystal display device that has a rectangular thin plate shape and is horizontally elongated to match the width of the item shelf 140 on which a plurality of items are arranged side by side. As long as characters and numerals can be displayed so as to be visible to customers, the type and shape of the item shelf display 40 are not particularly limited. For example, the item shelf display 40 may have a vertically elongated shape. The item shelf display 40 corresponding to each shelf of the item shelf 140 may be configured according to the shape and structure of the item shelf 140.

For example, as shown in FIG. 1, the name and quantity of the item 100, for which the taking by a customer has been detected, are displayed on the item shelf display 40. Since the customer who has taken the item 100 is notified not only that the taking of the item 100 has been detected but also that the item information and quantity of the taken item 100 have been detected, an effect of preventing the theft of the item 100 can be expected.

For example, in the item shelf 140 including a plurality of tiers of shelves arranged vertically, the item shelf display 40 may be provided on each tier of the shelves, and information regarding the item pickup may be displayed on the item shelf display 40 provided on the tier from which the item was picked up. The information may also be displayed not only on the item shelf display 40 on the tier of the shelf from which the item was picked up, but also on the item shelf displays 40 on a plurality of tiers such as tiers above and below that the tier. The information may be displayed on the item shelf display 40 positioned on a tier near the eye level of the customer, based on the height of the customer detected by the camera 20. That is, the information on the picked item may be displayed on the item shelf display 40 selected from among the item shelf displays 40 on each of the tiers, based on the height of the customer who has picked up the item. The information may be displayed on the item shelf display 40 provided separately from the shelves. For example, the information may be displayed on the item shelf display 40 provided at a position higher than the upper end of items displayed on the top-tier shelf of the item shelf 140.

The display mode of the item shelf display 40 may be changed such that the customer notices information displayed on the item shelf display 40. The change in the display mode includes at least one of blinking the background and/or characters, and changing the display color of the background and/or characters. The information display may be changed by using animations including various effects such as scrolling, fade-in, and fade-out. For example, when it is detected that a customer has picked up an item from the shelf, the display mode may be changed to attract the attention of this customer by blinking the entire item shelf display 40 provided on the shelf, and then the customer may be notified that the item pickup has been detected by the system.

The notification may be performed not only by displaying information but also by outputting sound. For example, a sound output device such as a buzzer may be provided in association with the item shelf display 40. A short electronic sound or the like may be outputted to attract the attention of the customer, and then information may be displayed on the item shelf display 40 toward the customer who noticed the sound from the sound output device near the item shelf display 40. The item shelf 140 may be provided with a speaker to provide voice notification. For example, information on the item picked up by the customer, such as the name and quantity of the item, may be outputted by voice.

### <Notification via cart terminal>

The management apparatus 10 displays information indicating that the pickup of an item 100 has been detected, on the display 50b of the cart terminal 50 provided on the cart 150. As shown in FIG. 1, the name and quantity of the item 100, for which the pickup by the customer has been detected, may also be displayed on this screen. The cart terminal 50 is an exemplary notification device provided on the cart 150. The notification via the cart terminal 50 is performed to notify the customer who has picked up the item 100 that the management apparatus 10, i.e., the store, has grasped information on the item 100 picked up by the customer from the item shelf 140, such as name, quantity, and the like.

The management apparatus 10 can identify the correspondence between a customer and an item 100 picked up by the customer from the item shelf 140 by tracking the customer moving in the store by using the camera 20. In addition, the management apparatus 10 can associate a customer with the cart 150 being used by the customer to manage correspondences between customers and the carts 150. It enables the management apparatus 10 to perform the notification process for the customer who has picked up the item 100 from the item shelf 140, via the cart terminal 50 on the cart 150 being used by this customer.

The management apparatus 10 can associate a cart number for identifying each cart 150 in the store with the customer being tracked by the camera 20. For example, while starting to track a customer by using the camera 20 installed near the store entrance, the management apparatus 10 may identify the cart number of the cart 150 that the customer has started using from among a plurality of carts 150 prepared near the store entrance in advance, and associate the customer with the cart number, i.e., associate the customer with the cart 150. The management apparatus 10 may receive, from the cart terminal 50, the identification number of the cart 150 stored in the memory of the cart terminal 50, and an image of the customer pushing the cart 150 captured by the camera of the cart terminal 50 provided as the scanner 50a to recognize the correspondence between the customer pushing the cart 150 and the customer being tracked by the camera 20 and associate the customer with the cart number.

Similar to the item shelf display 40, the display mode of information on the display 50b of the cart terminal 50 may be changed such that the customer notices the information displayed on the display 50b, and a notification may be performed not only by displaying information, but also by using a sound output device to output electronic sounds, voice, or the like.

Instead of or in addition to the cart terminal 50, the management apparatus 10 may use another display device installed on the cart 150 to display the information. For example, the cart terminal 50 may be used to display information on each item for which item information has been registered using the scanner 50a and which has been placed into the cart 150 by the customer, while information regarding the pickup of the item from the item shelf 140 may be displayed on another display device provided separately and near the cart terminal 50.

As described above, upon detecting that the customer has picked up the item 100 from the item shelf 140, the management apparatus 10 displays information indicating that the pickup of the item has been detected, on the item shelf display 40 of the item shelf 140 and/or the cart terminal 50 of the cart 150, in order to notify the customer. At this time, the management apparatus 10 can perform a notification of information on the item such as the name, quantity, and price of the item picked up by the customer. Since the customer recognizes that the pickup of the item by the customer and the information on the item picked up by the customer are managed by the store, an effect of preventing the theft of items can be expected.

### <Notification via cart>

The management apparatus 10 can notify the state of the customer via the notification device 60 provided on the cart 150. The notification is performed to inform a clerk that a customer has picked up an item 100 from the item shelf 140. The notification via the notification device 60 provided on the outer side of the cart 150 is performed such that the content of the notification can be checked from a location away from the cart 150, and thus surrounding customers also become aware of the notification. The customer pushing the cart 150 may also become aware of the notification performed by the notification device 60 on his/her cart 150.

The management apparatus 10 may directly control the notification device 60 to perform the notification. Alternatively, the management apparatus 10 may instruct the cart terminal 50 on the content of the notification, and the cart terminal 50 may control the notification device 60 to perform the notification based on the instruction.

For example, the notification device 60 includes a light-emitting element such as an LED capable of emitting light in a color selected from a plurality of colors. The notification device 60 is fixed to the cart 150 such that the clerk can easily confirm the light emission of the notification device 60. For example, an LED panel fixed to the right side surface of the cart 150 and an LED panel fixed to the left side surface thereof are used as the notification device 60. As long as the clerk can easily visually confirm the light-emitting state and the light emission color from a position away from the cart 150, the configuration and the fixing location of the notification device 60 are not particularly limited. A light-emitting device other than an LED, or a liquid crystal display device may be used as the notification device 60.

For example, upon detecting that the customer has picked up the item 100 from the item shelf 140, the management apparatus 10 causes the notification device 60, which is normally off, to emit light in a predetermined color set in advance. That is, the management apparatus 10 changes the light emission mode of the notification device 60 based on the detection result of the item pickup. When the customer performs an item registration operation on the cart terminal 50, the management apparatus 10 stops the light emission of the notification device 60 to turn it off.

Based on the fact that the notification device 60 of the cart 150 is emitting light, the clerk can recognize that the item 100 has not been registered on the cart terminal 50 even though the customer has picked up the item 100 from the item shelf 140. When the notification device 60, which had been emitting light, turns off, the clerk can recognize that the customer has completed the registration of the picked item 100 on the cart terminal 50. The change in the light emission mode of the notification device 60 is not limited to turning on and off, and may include changing the light emission color and/or the light emission pattern such as switching between steady lighting and blinking.

The management apparatus 10 may change the light emission mode of the notification device 60 according to the elapsed time from when the pickup of the item was detected. For example, upon detecting the pickup of the item by the customer, the management apparatus 10 causes the notification device 60, which was off, to light up and, after a predetermined time set in advance has elapsed, causes the notification device 60 to blink.

The light emission mode may be changed in cases other than the example of elapsed time. For example, while tracking a customer by using the camera 20, the management apparatus 10 may change the light emission mode, when the management apparatus 10 detects that the customer has started moving from the item shelf 140, from which an item was picked up by the customer, to another item shelf 140. The management apparatus 10 may change the light emission mode of the notification device 60, based on the fact that the customer has moved a predetermined distance set in advance, away from the item shelf 140 from which the item was picked up. The change in light emission mode may include at least one of a difference in the light emission pattern such as off mode, blinking, or steady lighting, and a difference in the light emission color.

For example, the notification device 60 starts emitting light when the management apparatus 10 detects that the item 100 has been picked up from the item shelf 140, and then starts blinking after five minutes have elapsed since the detection. The clerk, who recognizes the elapsed time by confirming that the notification device 60 has started blinking, can take measures such as speaking to the customer.

The management apparatus 10 may change the light emission mode of the notification device 60 stepwise. By preparing settings related to the light emission mode in advance, the management apparatus 10 controls the light emission mode of the notification device 60, based on the settings.

For example, the notification device 60 may be configured to emit blue light upon detecting the pickup of an item, to emit yellow light after five minutes have elapsed since the detection, and to emit red light after ten minutes have elapsed since the detection. That is, if the customer does not register information on the picked item on the cart terminal 50, the light color is changed to blue, yellow and red in turn. The clerk can recognize the time elapsed since the customer picked up the item 100 from the item shelf 140 without registering it on the cart terminal 50, based on whether the notification device 60 emits blue, yellow, or red light. Additionally, the notification device 60 may be configured to change the light emission mode according to the quantity of items that have not been registered after being picked up from the item shelf 140. For example, in the case of the above example in which the notification device 60 emits blue light upon detecting the item pickup, the light emission mode may be changed such that the blue light blinks once per second when two items 100 have been picked up, while the blue light remains steadily without blinking when one item 100 has been picked up from the item shelf 140. The light emission mode is also changed in the same manner for other lights such as yellow, red, and the like. The number of times the light emits per second may be changed according to the quantity of items, such as two times per second when the number of items is two, so that the clerk can recognize the quantity of unregistered items. In a specific example, the notification device 60 lights up blue when the customer has picked up one item, then lights up yellow after five minutes, and lights up red after ten minutes if the item remains unregistered. On the other hand, the notification device 60 blinks blue when the customer has picked up two items, then blinks yellow after five minutes, and blinks red after ten minutes if the items remain unregistered.

In another example, the notification device 60 emits bule light when one item 100 has been detected as picked up from the item shelf 140, and emits yellow light when detecting the pickup of another item while the item 100 remains unregistered on the cart terminal 50. That is, when the first item 100 is picked up from the item shelf 140, and the second item 100 is picked up from the same item shelf 140 before the first item 100 is registered on the cart terminal 50, the light emission mode is changed to inform the clerk.

The store prepares in advance one or more conditions for causing the notification device 60 to emit light and light emission modes for each condition when satisfied, according to a method of using the notification device 60 determined in the store. Then, the management apparatus 10 controls the notification device 60 based on the settings. Based on the notification by the notification device 60, the clerk can recognize the state of the customer and take measures such as speaking to the customer, as necessary. When the notification device 60 is a liquid crystal display device capable of displaying characters and numerals, the correspondence between customer situations, such as the pickup of an item 100 from the item shelf 140 or the registration of the item 100 on the cart terminal 50, and numerals and/or words indicating each situation may be predefined, and the notification may be performed by displaying the numerals and/or words on the notification device 60 according to the customer situation.

### <Notification via checkout counter>

As shown in FIG. 1, the management apparatus 10 can also notify the customer of information on the item picked up by the customer from the item shelf 140, at the checkout counter display 70 installed near the checkout counter of the store. The notification via the checkout counter display 70 is performed to inform the customer, before the customer starts a checkout process, that the management apparatus 10, i.e., the store, has grasped information on all the items picked up by the customer from the item shelves 140 in the store, such as names, quantities, and the like.

The management apparatus 10 tracks movement of the customer by using the cameras 20 installed at a plurality of locations in the store such as a ceiling, a wall surface, and an item shelf 140. The management apparatus 10 detects that the customer has entered a predetermined area leading to the checkout counter and displays the information on all items picked up by the customer from the item shelves 140 on the checkout counter display 70.

For example, as shown in FIG. 1, the management apparatus 10 displays the total quantity of the items picked up by the customer from the item shelves 140, on the checkout counter display 70. Additionally, at least one of the name, quantity, and price of each item may be displayed on the screen, and/or an image of the customer captured by the camera 20 may be displayed on this display screen.

The management apparatus 10 may display not only the total quantity of the items picked up by the customer from the item shelves 140 but also the total quantity of the items registered on the cart terminal 50 by the customer, on the checkout counter display 70. The management apparatus 10 may compare the items picked up by the customer from the item shelves 140 with the items registered on the cart terminal 50 by the customer, and display the comparison result on the checkout counter display 70. For example, the checkout counter display 70 is used by the management apparatus 10 in order to display information indicating that there is an unregistered item which is picked up from the item shelf 140 but is unregistered on the cart terminal 50, and/or information on the name and quantity of the unregistered item.

As described above, the management apparatus 10 can notify the customer of information on the item picked up by the customer from the item shelf 140, before the customer starts making payment of the transaction amount at the settlement apparatus 80 installed at the checkout counter. For example, if a malicious customer picks up two items from the item shelf 140 and places one of the items into a bag without registering the item on the cart terminal 50, this customer can recognize, before payment, that the store has detected the pickup of the two items. Therefore, an effect of preemptively preventing the theft of items can be expected.

### [Specific example of sales system]

FIG. 2 is a block diagram showing an example of the configuration of the sales system 1. The sales system 1 includes a communication terminal 90 used by a clerk, in addition to the camera 20, the weight sensor 30, the item shelf display 40, the cart terminal 50, the checkout counter display 70, and the settlement apparatus 80 described with reference to FIG. 1. As shown in FIG. 2, the management apparatus 10 can communicate with each device via a network 2.

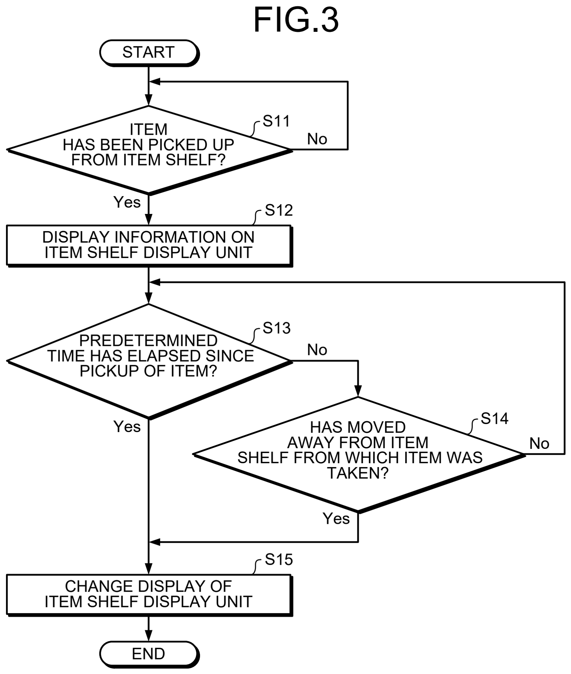

FIG. 3 is a flowchart showing an example of a processing flow performed by the management apparatus 10 for the item shelf display 40. The management apparatus 10 monitors whether the customer has picked up an item from the item shelf 140 (step S11; No) by using the camera 20 and the weight sensor 30. If the pickup of an item is detected (step S11; Yes), the management apparatus 10 displays information, based on the detection result, on the item shelf display 40 (step S12).

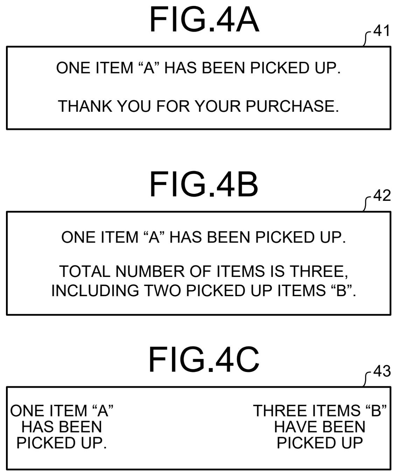

FIGS. 4A to C show examples of a screen displayed on the item shelf display 40 by the management apparatus 10. For example, as shown on a screen 41 in FIG. 4A, the management apparatus 10 displays the name and quantity of an item picked up by a customer from the item shelf 140 to notify the customer that the pickup of the item has been detected. In order to reduce any discomfort that the customer may feel from being monitored or the like, the management apparatus 10 may also display a message expressing gratitude for the purchase, such as "Thank you for your purchase", in addition to the information on the item.

As shown on a screen 42 in FIG. 4B, the management apparatus 10 may display not only the information of the item detected as picked up, but also information of each item picked up by the customer from the item shelf 140 before the detection. The information may include the name, the quantity, and the like of each item. That is, the total number obtained by summing the numbers of the items picked up by the customer from one or more item shelves 140 may be displayed. The example shown in FIG. 4B indicates that it is detected that the customer picked up one item having an item name "A" from the item shelf 140, and the pickup of two items each having an item name "B" was detected before the detection of item "A", and that the total number of items picked up by the customer becomes three.

As shown on a screen 43 in FIG. 4C, the management apparatus 10 can display the detection result of for each of a plurality of customers, on the item shelf display 40. For example, when a customer picks up an item placed on the left side of a shelf in the item shelf 140 and another customer picks up items placed on the right side of the same shelf 140 almost simultaneously, the management apparatus 10, which has detected these actions, can display information regarding the picked items to each customer, as shown in FIG. 4C. That is, a plurality of detection results of the item pickup can be displayed on a single screen simultaneously. In an example shown in FIG. 4C, the management apparatus 10 detects that the customer has picked up one item having the item name "A" from the left side of the shelf, while another customer has picked up three items each having the item name "B" from the right side of the same shelf. As described above, even when a plurality of customers simultaneously picks up items from the same shelf, the management apparatus 10 can divide the display region of the item shelf display 40 provided on the shelf into a plurality of regions and notify each customer, by using the display region corresponding to the customer, that the pickup of the items has been detected.

In a case where the management apparatus 10 detects that a plurality of customers have picked up items from the same shelf almost simultaneously, the management apparatus 10 may display information for notifying each customer using the item shelf display 40 provided on that shelf and the item shelf displays 40 provided on the upper and lower tiers with respect to the shelf. That is, a plurality of item shelf displays 40 may be used to display information on the items picked up from a single shelf. In the example shown in FIG. 4C, information for the customer on the left side may be displayed so as to be aligned to the left end of the item shelf display 40, and information for the customer on the right side may be displayed so as to be aligned to the right end of the item shelf display 40 provided on a different tier of the shelf.

If a predetermined time set in advance has elapsed from when the pickup of the item was detected (step S13; Yes in FIG. 3), the management apparatus 10, which has displayed information on the item shelf display 40, changes the display of the item shelf display 40 (step S15) and then ends the process. For example, after clearing the information display on the item shelf display unit 40 shown in FIGS. 4A to 4C, nothing may be displayed thereon, or the item shelf display 40 may be used to display advertisements for the store and/or items.

If the predetermined time has not elapsed from when the pickup of the item was detected (step S13; No), the management apparatus 10 determines whether or not the customer has moved away from the item shelf 140 from which the customer picked up the item (step S14). If the customer does not move away from the item shelf 140 (step S14; No), the process returns to step S13. If the customer has moved away from the item shelf 140 (step S14; Yes), the management apparatus 10 changes the display of the item shelf display 40 (step S15) and ends the process, as in the case where the predetermined time has elapsed. For example, based on an image captured by the camera 20, the management apparatus 10 determines that the customer has started moving away from the item shelf 140 from which the item was picked up or that the customer has moved beyond a predetermined distance from the item shelf 140 and then, based on the determination result, the management apparatus 10 causes the item shelf display 40 to terminate the display of the information on the item picked up by the customer.

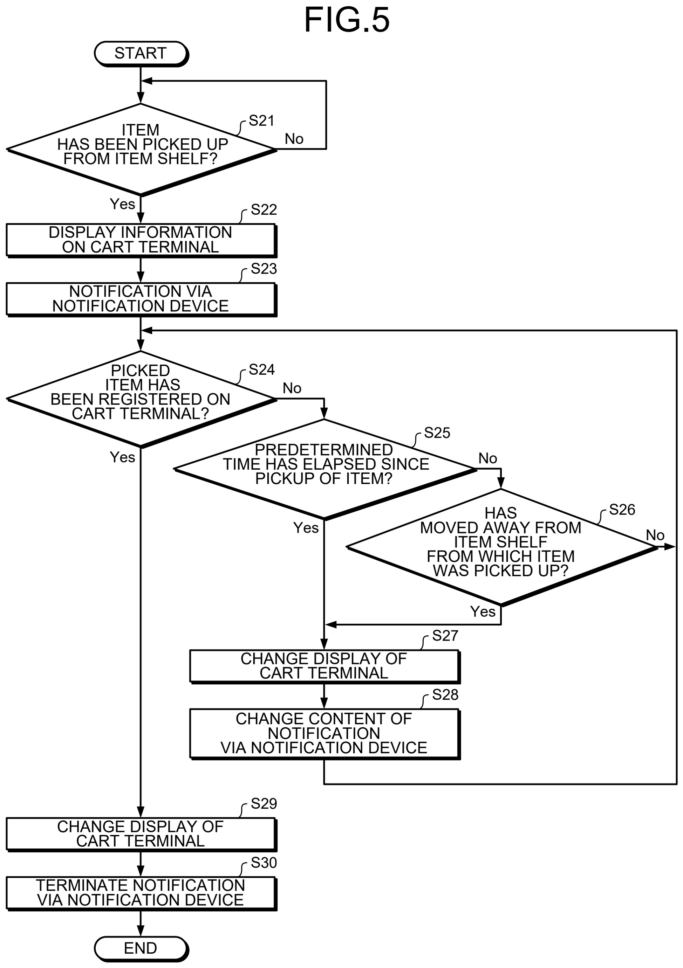

FIG. 5 is a flowchart showing an example of a processing flow performed by the management apparatus 10 for the cart terminal 50 and the notification device 60 provided on the cart 150. The management apparatus 10 monitors whether or not an item has been picked up by the customer from the item shelf 140 (step S21; No) by using the camera 20 and the weight sensor 30. If the pickup of the item has been detected (step S21; Yes), the management apparatus 10 displays information using the cart terminal 50 (step S22) and performs notification using the notification device 60, based on the detection result (step S23).

The notification via the notification device 60 is performed as described with reference to FIG. 1. For example, the notification device 60, which is normally off, starts emitting light, or the notification device 60 starts emitting light in a different color from the usual color, thereby notifying a clerk that the pickup of the item has been detected by the management apparatus 10.

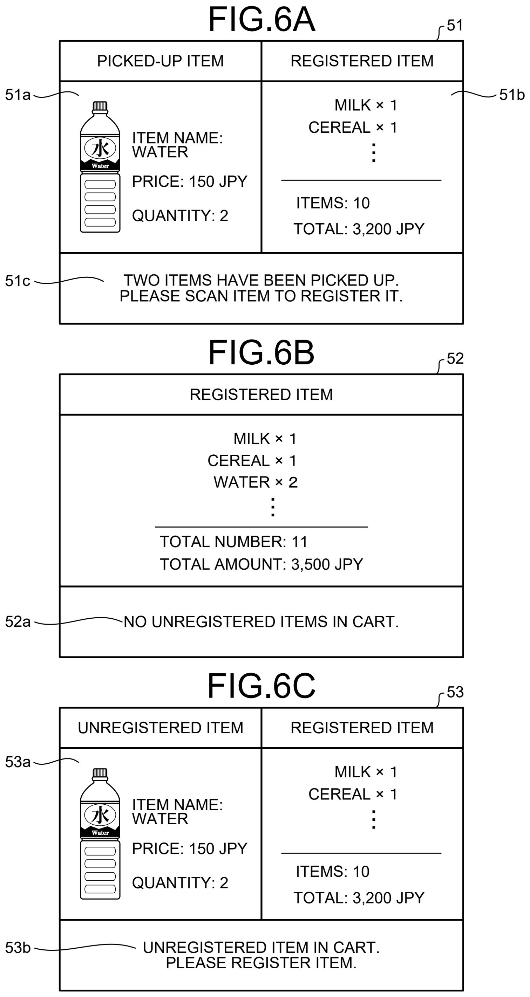

FIGS. 6A to 6C show examples of a screen displayed on the cart terminal 50 by the management apparatus 10. For example, on a screen 51 shown in FIG. 6A, the management apparatus 10 displays information 51a on items picked up by the customer from the item shelf 140 and information 51c indicating that the pickup has been detected. For example, the information 51a on the picked items includes the name, quantity, and price of each item. The information 51c indicating that the pickup of the items has been detected includes the total number of picked items. The display information 51c may include information prompting the customer to register the picked items on the cart terminal 50. In addition, information 51b on items registered on the cart terminal 50 by the customer may be displayed on the screen 51 of the cart terminal 50.

If the item detected as picked up from the item shelf 140 has been registered on the cart terminal 50 (step S24; Yes), the management apparatus 10, which has displayed the information on the cart terminal 50, changes the display of the cart terminal 50 (step S29), terminates the notification via the notification device 60 (step S30), and then ends the processing shown in FIG. 5. The notification device 60 terminates notifying the clerk by turning off or changing the light emission color, for example.

The screen 51 of the cart terminal 50 transitions to a screen 52 indicating that the registration of the picked item has been completed. The cart terminal 50 displays the screen 52 indicating that there are no unregistered items picked up from the item shelf but not registered on the cart terminal 50. For example, the information 51a on the picked item displayed on the screen 51 shown in FIG. 6A disappears, and the updated screen 52 displays information on the registered items as shown in FIG. 6B. The screen 52 includes information 52a indicating that there are no unregistered items.

If the item detected as picked up from the item shelf 140 has not been registered on the cart terminal 50 (step S24; No in FIG. 5) and a predetermined time set in advance has elapsed from when the pickup of the item was detected (step S25; Yes), the management apparatus 10 changes the display of the cart terminal 50 (step S27) while changing the content of the notification via the notification device 60 (step S28). For example, the notification device 60 notifies the clerk that the customer has not registered the item on the cart terminal 50, although the predetermined time has elapsed since the item was picked up from the item shelf 140, by changing the light emission pattern from steady lighting to blinking or changing the light emission color.

At the time of performing step S28, the management apparatus 10 may transmit a notification to the communication terminal 90 carried by a clerk to notify that the customer has not registered the item on the cart terminal 50. For example, the management apparatus 10 may transmit, to the communication terminal 90, an image of the customer captured by the camera 20 and/or the camera of the cart terminal 50 used as the scanner 50a, and information on the item not registered on the cart terminal 50 by the customer. The clerk can check the received information and take measures such as speaking to the customer.

The screen 51 of the cart terminal 50 transitions to a screen 53 indicating that there is an unregistered item (step S27). For example, the information 51a on the picked item on the screen 51 shown in FIG. 6A is displayed as information 53a on the unregistered item in the updated screen 53 shown in FIG. 6C. The screen 53 includes information 53b prompting the customer to perform a registration operation for the unregistered item. The cart terminal 50 may output a warning sound when the item remains unregistered. The warning sound may continue until the unregistered item is registered on the cart terminal 50.

Even when the predetermined time has not elapsed from when the pickup of the item was detected (step S25; No in FIG. 5), if the customer has moved away from the item shelf 140 (step S26), the display of the cart terminal 50 is changed (step S27) and the content of the notification via the notification device 60 is also changed (step S28), as described above. For example, based on the image captured by the camera 20, if the management apparatus 10 has detected that the customer has started moving away from the item shelf 140 from which the item was picked up or that the customer has moved beyond the predetermined distance from the item shelf 140, the management apparatus 10 determines that the customer has moved away from the item shelf 140, thereby causing changes to the cart terminal 50 and the notification device 60.

If the customer has not moved away from the item shelf 140 (step S26; No), the process returns to step S24. After step S27 and S28, the process also returns to step S24 and enters a standby state for waiting for the customer to register the unregistered item on the cart terminal 50. If the customer who has checked the screen 53 shown in FIG. 6C performs the registration operation (step S24; Yes in FIG. 5), the screen 53 of the cart terminal 50 is changed to the screen 52 shown in FIG. 6B (step S29 in FIG. 5), the notification via the notification device 60 terminates (step S30), and the processing shown in FIG. 5 ends.

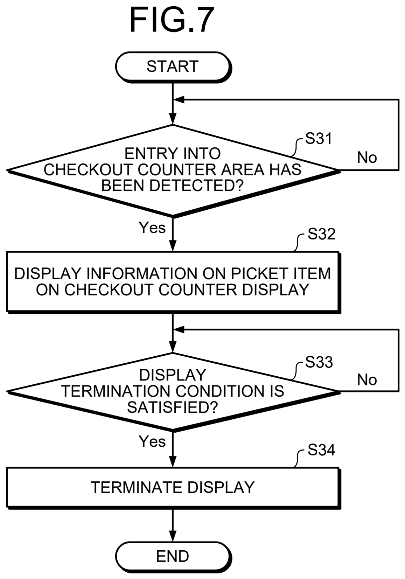

FIG. 7 is a flowchart showing an example of a processing flow performed by the management apparatus 10 for the checkout counter display 70. The management apparatus 10 monitors whether or not the customer enters the checkout counter area in which the settlement apparatus 80 is installed by using the camera 20 (step S31; No). If the entry of the customer is detected (step S31; Yes), the management apparatus 10 displays information relevant to the picked items, on the checkout counter display 70 (step S32). For example, a customer moving along the path from the item sales area to the settlement apparatus 80 at the checkout counter is detected before reaching the checkout counter, and information on the detected customer is displayed on the checkout counter display 70.

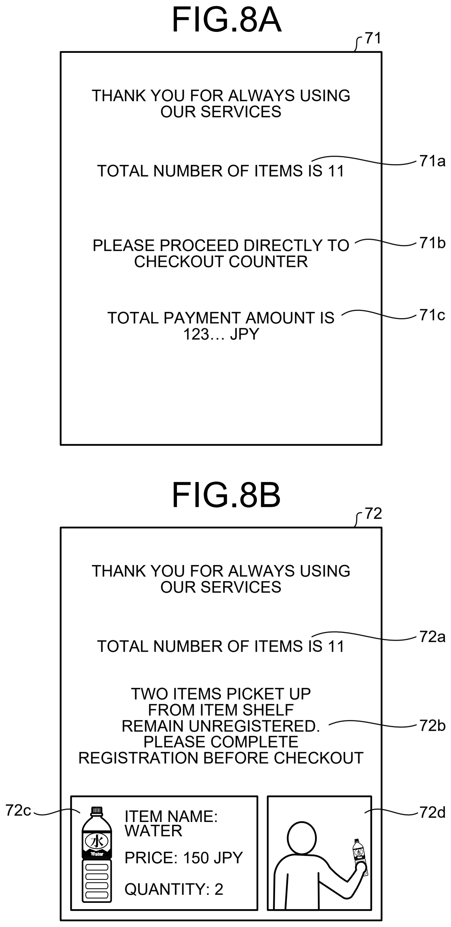

FIGS. 8A and 8B show examples of a screen displayed on the checkout counter display 70 by the management apparatus 10. FIG. 8A shows an example of a screen 71 displayed when all items picked up from the item shelf 140 have been registered on the cart terminal 50 by the customer. FIG. 8B shows an example of a screen 72 displayed when one or more items picked up from the item shelf 140 have not been registered on the cart terminal 50 by the customer.

When there are no unregistered items, the management apparatus 10 may display information 71a on the total number of items picked up by the customer from item shelves 140, as shown on the screen 71 in FIG. 8A. The management apparatus 10 displays information 71b indicating that the customer can proceed directly to the checkout counter and start a checkout process at the settlement apparatus 80 on the screen 71. The management apparatus 10 may further display information 71c indicating the total amount of items registered on the cart terminal 50 by the customer, that is, the transaction amount. Alternatively, when there are no unregistered items, the display of information by the checkout counter display 70 may be omitted.

On the other hand, when there are unregistered items, the management apparatus 10 displays information 72a on the total number of items picked up by the customer from the item shelves 140 and information 72b indicating that these items include unregistered items, as shown on a screen 72 in FIG. 8B. On the screen 72, information indicating the number of the unregistered items and information prompting the customer to complete registration of the unregistered items on the cart terminal 50 before starting the checkout process at the settlement apparatus 80 may be displayed.

Furthermore, the management apparatus 10 may display information 72c on the unregistered items and/or an image 72d captured by the camera 20 when the pickup of the unregistered item from the item shelf 140 has been detected, on the screen 72. Since information such as the name, quantity, and amount of each unregistered item and/or the captured image of the customer picking up the unregistered item are displayed, an effect of preventing the theft of items can be expected.

When there is an unregistered item, the management apparatus 10 may transmit a notification to the communication terminal 90 carried by the clerk to notify that the customer with the unregistered item is proceeding toward the checkout counter. For example, the management apparatus 10 transmits an image of the customer captured by the camera 20 and/or the scanner 50a, and/or information on the unregistered item, to the communication terminal 90. The clerk can check the received information and take measures such as speaking to the customer.

The management apparatus 10, which has displayed information on the checkout counter display 70, continues the display until a preset display termination condition is satisfied (step S33; No in FIG.7). If the display termination condition is satisfied (step S33; Yes), the management apparatus 10 terminates the display on the checkout counter display 70 and ends the processing shown in FIG. 7. For example, the display termination condition is set such that the displayed information disappears when it is detected that the customer has passed the installation position of the checkout counter display 70 based on the image captured by the camera 20 or when it is detected that the customer has registered information on the unregistered item on the cart terminal 50.

While the checkout counter display 70 does not need to display information on customers, the checkout counter display 70 may be used for displaying advertisements of the store and/or items. For example, a display device for digital signage is installed in the store for displaying advertisements of the store and items, and this device may be utilized as the checkout counter display 70.

In examples of the present embodiment, the item shelf display 40 is controlled by the management apparatus 10. However, the item shelf 140 may control the item shelf display 40 independently from the management apparatus 10. For example, a control device for the item shelf display 40 may be provided on the item shelf 140 to realize the above examples. As performed by the management apparatus 10, the control device manages information on each item on the item shelf 140, and the correspondence between the position of each item placed on the item shelf 140 and the weight sensors 30, each of which is used as an item detection sensor to detect the pickup of the item at each position. Accordingly, the control device can identify the name, quantity, and the like of the item picked up by the customer from the item shelf 140, based on the information managed therein and the detection result by the item detection sensor, and control the display of information on the item shelf display 40, in the same manner as the management apparatus 10 described above.

In examples of the present embodiment, the customer places a picked item into the cart 150, on which the cart terminal 50 is installed, to carry the items to be purchased. The cart 150 is an exemplary carrier that the store prepares in advance for customers. The type of the carrier used by a customer to carry items in the store is not particularly limited. For example, instead of or in addition to the cart 150, an item basket provided with the above-described cart terminal 50, or a terminal having the same functions as the cart terminal 50, may be used. In this case as well, various information may be displayed on the screen of the terminal installed on the item basket in the same manner as described above. Furthermore, the notification device 60 may be installed on a side surface of the item basket to notify the various information in the same manner as described above.

In examples of the present embodiment, the item shelf display 40 elongated in the placement direction of items so as to correspond to a plurality of rows of items placed on each tier of shelves of the item shelf 140 is used. As long as the item shelf display 40 can operate as described above, the shape and configuration of the item shelf display 40 are not particularly limited. For example, electronic price tags that are provided corresponding to the rows of items placed on the item shelf 140 and are used to display the name and price of each item, may be utilized as the item shelf display 40.

In the present embodiment, the description is mainly focused on an example in which the sales system 1 detects the pickup of an item in order to prevent the theft of items. However, it is needless to say that the sales system 1 can detect an item returned by a customer to the item shelf 140 and, when the item has been returned, terminate the display or notification of information via the item shelf display 40, the cart terminal 50, and the notification device 60.

In examples of the present embodiment, by using the item shelf display 40 provided on the item shelf 140, and the cart terminal 50 and the notification device 60 provided on the cart 150, substantially simultaneously with detecting the pickup of an item from the item shelf 140, information indicating that the pickup of the item has been detected is notified through displaying or light emission. The timing of the notification is not limited to the above-described example. For example, the notification may be performed in consideration of the possibility that the item will be returned to the item shelf 140. For example, the notification may be performed after waiting for a preset time (e.g., several seconds) following the detection of the pickup of the item from the item shelf 140. Further, the notification may be performed at the time when the item picked up by the customer from the item shelf 140 is placed into the cart 150 and the item is no longer in the customer's hands. In this case, based on images captured by the camera 20, while tracking the item that the customer has picked up from the item shelf 140 and is holding, the management apparatus 10 may detect that the item is no longer in the customer's hands, and perform the notification substantially simultaneously with the detection.

Each device such as the management apparatus 10 described in the present embodiment includes therein a control circuitry an d a memory, and the functions and operations of the above-describe d device are realized by control performed by the control circuitr y. For example, a program corresponding to the control circuitry is stored in advance in the memory or a dedicated storage device. This program is executed by hardware such as a CPU, thereby reali zing the function and operation of the control circuitry. In addi tion, the control circuitry performs control based on information inputted/outputted via an operation unit and a display, informatio n transmitted/received via a communication unit, information store d in the memory, or the like, thereby realizing the functions and operations of the devices.

The functions and operations realized by the components described in the present embodiment may be realized by circuits or processing circuits, programmed so as to realize the functions and operations, including general-purpose processors, application specific processors, integrated circuits, ASICs (Application Specific Integrated Circuits), CPUs (Central Processing Units), conventional-type circuits, and/or a combination of these. The processor is regarded as a circuit or a processing circuit including a transistor and another circuit. The processor may be a processor that executes a program stored in a memory. The components described in the present embodiment are hardware that is programmed to realize the described functions or hardware that is configured to execute the functions. The hardware may be the hardware described in the present embodiment, or hardware that is programmed to realize or known to execute the described functions. When the hardware is a processor regarded as an example of a circuit, the components described in the present embodiment may be a combination of the hardware and software used by the hardware and/or the processor.

The configuration of the sales system described in the present embodiment is conceptually functional, and the configuration may not necessarily be physically limited thereto. Distributed or integrated forms of each device are not limited to the above-described forms, and all or some of the forms may be distributed or integrated functionally or physically in any unit depending on various loads, use statuses, or the like.

As described above, although the embodiment of the sales system according to the present disclosure has been described with reference to the drawings, the configurations and operations of the sales system and each device constituting the sales system are not limited to the above embodiment, and may be carried out with various improvements, alterations, and modifications, based on the knowledge of those skilled in the art without departing from the spirit thereof.

The sales method and the sales system according to the present disclosure are useful for preemptively preventing the theft of items sold on item shelves.

## Claims

1. A sales method for a store that places items on an item shelf (140) to sell the items, the sales method comprising:
detecting that a customer picks up an item from the item shelf (140), by using an item detection sensor (30); and
performing, when a pickup of the item is detected by the item detection sensor (30), a notification of information indicating that the pickup of the item has been detected, by using a notification device (40) provided on the item shelf (140).

2. The sales method according to claim 1, further comprising,
performing a notification of information indicating an item name of the item picked up from the item shelf (140), by using the notification device (40) of the item shelf (140).

3. The sales method according to claim 1, further comprising,
performing a notification of information indicating a number of the items picked up from the item shelf (140), by using the notification device (40) of the item shelf (140).

4. The sales method according to claim 1, wherein
a carrier (150), on which a notification device (50, 60) is provided and which is used by a customer to carry an item to be purchased, is prepared in the store,
the sales method further comprising,
performing a notification of information indicating that the pickup of the item from the item shelf (140) has been detected, by using the notification device (50, 60) of the carrier (150) used by a customer who has picked up the item.

5. The sales method according to claim 4, further comprising,
changing, when a predetermined time has elapsed after the item detection sensor (30) detected the pickup of the item and information on the item has not been registered on a registration terminal (50) for registering therein information necessary for checkout of an item carried by the carrier, a content of the information notified by using the notification device (50, 60) of the carrier (150).

6. The sales method according to claim 4, wherein
the notification device (50, 60) of the carrier (150) is a registration terminal (50) configured to register therein information necessary for checkout of an item carried by the carrier (150).

7. The sales method according to claim 4, wherein the notification device (50, 60) of the carrier (150) is a light-emitting device (60).

8. The sales method according to claim 5, further comprising,
managing, in association, information on the carrier (150) used by the customer, and information on items picked up by the customer to put in the carrier (150) obtained by tracking the customer moving in the store by using a plurality of imaging devices (20) provided in the store, wherein
the information on items includes information on a registered item for which the information necessary for checkout has been registered on the registration terminal (50) used with the carrier (150), and information on an unregistered item for which the information necessary for checkout has not been registered on the registration terminal (50).

9. The sales method according to claim 8, further comprising
transmitting information on the unregistered item to a communication terminal (90) used by a clerk.

10. The sales method according to claim 1, further comprising
detecting a customer proceeding to a checkout counter in the store and performing a notification of information indicating a total number of items picked up by the customer from the item shelf (140), by using a notification device (70) provided near the checkout counter.

11. A sales system for a store that places items on an item shelf (140) to sell the items, the sales system comprising:
an item detection sensor (30) configured to detect that a customer picks up an item from the item shelf (140); and
a notification device (40) provided on the item shelf (140) and configured to perform, when a pickup of the item is detected by the detection sensor (30), a notification of information indicating that the pickup of the item has been detected.
